# DEMANDE DE BREVET EUROPEEN

(11) **EP 2 354 717 A2**
(43) Date de publication de la demande: **10.08.2011**
(21) Numéro de dépôt: 11153917.7
(22) Date de dépôt: 09.02.2011
(51) Int. Cl.: F24J 2/46, F24J 2/52, H01L 31/042

(54) **Structure de fixation pour panneaux solaires**

(30) Priorité: 10.02.2010 ES 201030114 U
(71) Demandeur: Producciones Mitjavila, S.A., 17730 Llers (ES)
(72) Inventeur: Mitjavila, Raymond, 66600 Rivesaltes (FR)
(74) Mandataire: Ponti Sales, Adelaida

(57) **Abrégé**

Structure de fixation de panneaux solaires (P) comprenant un premier profilé (1) de support qui comprend une âme (la), un second profilé de fixation (2) pouvu d'au moins une languette supérieure (2a, 2b) longitudinale et fixée par le haut à l'âme (la) de sorte que la languette supérieure (2a, 2b) précitée dépasse latéralement par rapport à l'âme (la) par un côté de celle-ci pour former une surface d'appui supérieure du bord supérieur d'un panneau solaire (P), au moins une surface d'appui inférieure (3) des panneaux solaires (P), les surfaces d'appui supérieure et inférieure mentionnées plus haut constituant des moyens de fixation par pression des panneaux solaires (P), où le second profilé (2) comprend des trous (H) traversants sur la languette supérieure précitée (2a, 2b) de sorte qu'il est possible d'échanger de l'air entre les deux côtés du panneau (P) et donc de le refroidir par sa partie postérieure.

## Description

L'invention présente a trait à une structure de fixation de panneaux solaires pourvue de moyens de réfrigération de l'espace postérieur des panneaux.

### ARRIÈRE PLAN TÉCHNIQUE DE L'INVENTION

On connaît différents types de structures de support pour capteurs solaires, tant thermiques que photovoltaïques, qui permettent de définir une toiture pour un espace habitable.

Un type de ces structures est celui qui est décrit dans la demande de certificat d'utilité du demandeur 200930286 lui-même, qui permet de configurer une toiture compacte et même résistante à la pluie.

Les profilés de fixation sont munis d'une languette qui a pour fonction de supporter les capteurs. Une fois les capteurs placés, on fixe sur le profilé un couvercle qui recouvre le bord des capteurs, permettant ainsi l'isolement contre la pluie ou contre tout élément susceptible de s'introduire entre le couvercle et les plaques. La fixation de ce couvercle se fait au moyen de vis auto-taraudeuses qui sont insérées grâce à une rainure située sur la partie supérieure du couvercle. Ces vis permettent d'exercer une pression sur le couvercle, et, à ce dernier, d'exercer à son tour une pression sur les capteurs afin de les bloquer.

Dans ce type de structures, pour obtenir une meilleure finition de la face inférieure de la toiture, on fixe des couvercles sur ces profilés pour dissimuler la partie postérieure des capteurs. Les couvercles ou lamelles précités définissent un espace entre eux et les capteurs, qui généralement comprennent une partie de l'installation nécessaire au fonctionnement des capteurs.

D'autre part, il se produit évidemment un réchauffement des capteurs, qui est dû principalement à la radiation solaire. Le réchauffement des capteurs provoque l'accroissement de la température de l'espace intérieur, ce qui implique:
- En premier lieu, une diminution du rendement des panneaux solaires, tout particulièrement lorsqu'ils sont photovoltaïques et,
- Les couvercles mentionnés, étant à une température élevée, irradient vers l'espace intérieur, dans lequel peuvent se trouver des occupants, ce qui, selon la loi de Stefan-Boltzmann, entraîne l'augmentation du flux de radiation (selon la température puissance quatre) et, par conséquent, un manque de confort thermique pour les personnes qui occupent cet espace.

Il est donc évident qu'il faut recourir à une structure de support pour plaques solaires qui apporte une solution aux inconvénients de la technique actuelle et qui permette en même temps un montage rapide et fiable.

### DESCRIPTION DE L'INVENTION

L'objectif de l'invention présente est de résoudre les inconvénients mentionnés, en mettant au point un profilé de fixation des capteurs solaires destiné à configurer une toiture qui rende possible la ventilation de l'espace défini par les capteurs et par le couvercle inférieur de la toiture.

Pour cela, on propose une structure de fixation de panneaux solaires comprenant:
- Un premier profilé de support qui comprend un âme;
- Un second profilé de fixation muni d'au moins une languette supérieure longitudinale et fixée par le haut à l'âme de sorte que la languette supérieure mentionnée dépasse latéralement par rapport à l'âme, d'un côté de celle-ci, pour former une surface d'appui supérieure du bord supérieur d'un panneau solaire;
- Au moins une surface d'appui inférieure des panneaux solaires;
- Les surfaces d'appui supérieure et inférieure mentionnées ci-dessus constituant des moyens de fixation par pression des panneaux solaires,

Sa caractéristique est que le second profilé comprend des trous traversant la languette supérieure mentionnée de sorte qu'il est possible de créer un échange d'air entre les deux côtés du panneau et donc de le refroidir par sa partie postérieure.

Selon d'autres caractéristiques optionnelles de l'invention:
- la structure comprend des sections de profilé fixées latéralement a l'âme sur un ou sur les deux côtés, chacun comprenant une languette qui dépasse latéralement l'âme d'un côté de celle-ci pour former la superficie d'appui inférieure mentionnée.
- la structure comprend un quatrième profilé destiné à coiffer ce second profilé et pourvu de languettes latérales s'étendant en porte-à-faux sur les trous cités plus haut, ce qui permet de réduire l'entrée d'eau dans ces trous lorsqu'il pleut.
- le second profilé comprend des languettes latérales additionnelles qui s'étendent en porte-à-faux sur les trous, et qui permettent de réduire l'entrée d'eau dans ces trous lorsqu'il pleut.
- l'âme comprend de chaque côté deux rainures d'emboîtement destinées à recevoir deux languettes d'accrochage des dites sections du profilé, de sorte qu'elles forment des moyens de fixation des dites sections du profilé à l'âme.
- l'âme comprend de chaque côté une rainure d'emboîtement destinée à recevoir une languette d'accrochage des dites sections du profilé, cette rainure et cette languette étant configurées de manière à empêcher la rotation relative entre l'âme et les sections du profilé, formant ainsi des moyens de fixation des dites sections du profilé sur l'âme.
- les rainures d'emboîtement mentionnées comprennent, sur leurs bords, des saillants longitudinaux qui configurent une ampleur d'entrée aux rainures précitées d'une ampleur inférieure aux languettes d'emboîtement des dites sections du profilé, constituant ainsi des moyens de retenue par friction des sections du profilé par rapport à l'âme.
- le second profilé de fixation est fixé par le haut à l'âme au moyen de deux pattes de fixation parallèles, destinées à s'emboîter dans l'âme par l'extérieur de celle-ci, l'âme étant constituée aussi de deux pattes qui configurent une ouverture longitudinale d'accès supérieur, de sorte que, en introduisant par cette ouverture une vis de diamètre nominal plus grand que l'ouverture, celle-ci fait pression sur les pattes de fixation de l'âme contre les pattes de fixation du dit second profilé, fixant ainsi par pression le second profilé à l'âme entre les pattes mentionnées.
- les languettes supérieures longitudinales comprennent des joints d'étanchéité longitudinaux orientés en direction du panneau.
- la surface d'appui inférieure des panneaux solaires comprend des joints d'étanchéité longitudinaux orientés en direction du panneau.
- Le premier profilé comprend des languettes supérieures longitudinales et des surfaces d'appui inférieures aux deux côtés de l'âme.

### BRÈVE DESCRIPTION DES DESSINS

Pour faciliter la compréhension de ce qui a été exposé sont joints des dessins dans lesquels est représenté, schématiquement et seulement à titre d'exemple non limitatif, un cas pratique de réalisation.
La figure 1 est une vue en coupe de la structure de fixation de panneaux solaires selon une première réalisation,
La figure 2 est une vue en perspective de la réalisation de la figura 1,

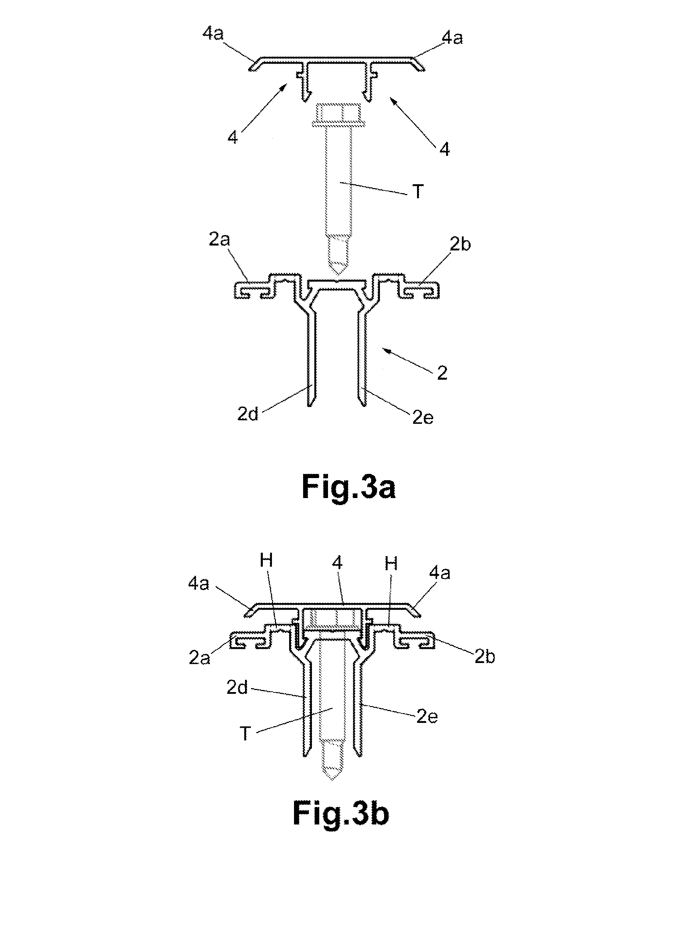

La figure 3 est une vue d'ensemble éclatée formée par le deuxième et le quatrième profilé,
La figure 3b est une vue d'ensemble formée par le second et le quatrième profilés,

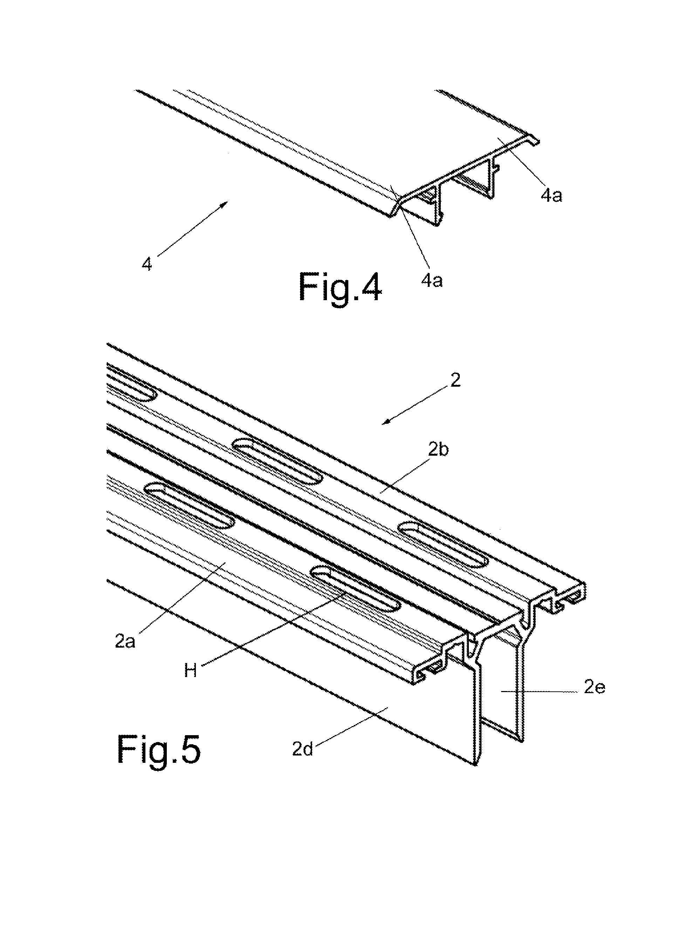

La figure 4 est une vue en perspective du quatrième profilé,
La figure 5 est une vue en perspective du second profilé,
La figure 6 est une vue en coupe de la structure de l'invention présente selon une seconde réalisation,
La figure 7 est une vue en détail de la figure 6 correspondant aux deuxième et quatrième profilés,
La figure 8 est une vue en perspective de la réalisation de la figure 6,
La figure 9 est une vue en perspective de la section du profilé emboîté avec le premier profilé,
La figure 10 est une vue en coupe de la structure de fixation de panneaux solaires selon une troisième réalisation.
La figure 11 est une vue en coupe où on peut voir la partie basse du profilé, pourvu de canaux de branchement avec des profilés contigus longitudinalement (c'est à dire perpendiculairement au plan de représentation).
La figure 12 est une vue en perspective partiellement éclatée où on peut voir le trou traversant et la position relative des différents profilés qui constituent la structure.

### DESCRIPTION D'UNE RÉALISATION PRÉFÉRÉE

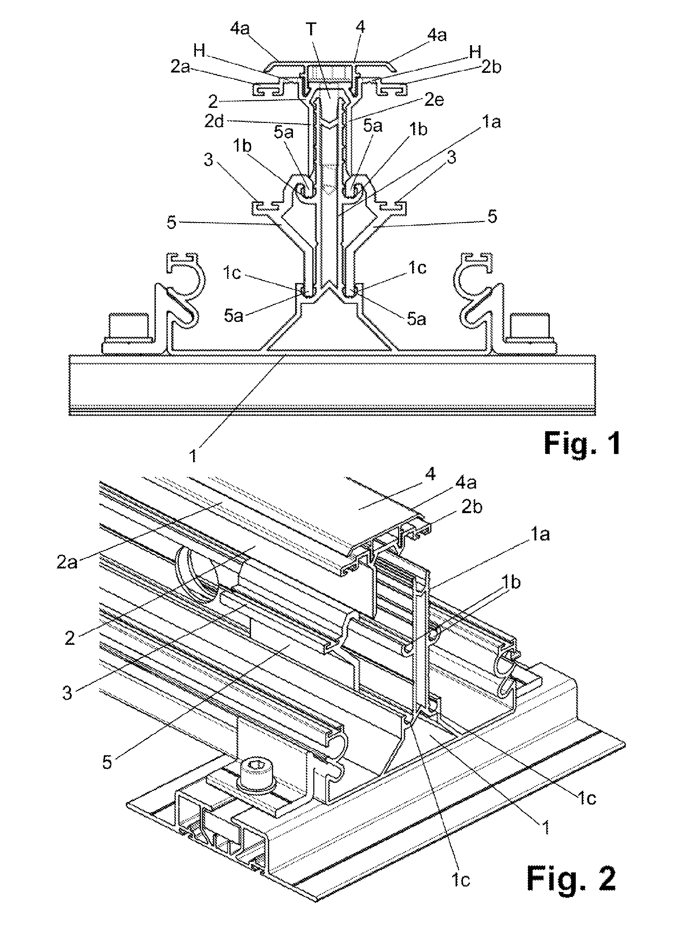

Comme on peut l'apprécier sur les figures 1 et 2, la structure de fixation de panneaux solaires comprend :
- Un premier profilé 1 de support qui comprend une âme la;
- Un second profilé de fixation 2 pourvu de deux languettes supérieures 2a, 2b longitudinales et fixées par le haut a l'âme de sorte que les languettes supérieures 2a, 2b dépassent latéralement par rapport à l'âme des deux côtés de celle-ci pour former une surface d'appui supérieure du bord supérieur d'un panneau solaire P;
- Et au moins une surface d'appui inférieure 3 des panneaux solaires P

Ainsi, les surfaces d'appui supérieure et inférieure 3 constituent des moyens de fixation par pression des panneaux solaires P.

L'invention consiste à ajouter à cette combinaison, comme caractéristique connue en soi, des trous H traversant la dite languette supérieure 2a, 2b du profilé 2.

Ces trous H rendent possible l'échange d'air entre les deux côtés du panneau P, ce qui permet donc de le refroidir par sa partie postérieure, tout cela étant possible grâce à une structure à base de profilés; ainsi, la substructure sur laquelle on monte la structure de fixation des panneaux solaires ne doit être munie préalablement d'un système de ventilation, puisque celui-ci lui est déjà incorporé.

La superficie inférieure d'appui 3 est obtenue au moyen de sections du profilé 5 fixées latéralement à l'âme sur un ou sur les deux côtés, selon qu'il s'agit ou non d'un profilé de l'extrémité latérale, et qui comprennent chacun une languette qui dépasse latéralement par rapport à l'âme 1.

Le fait d'employer des sections de profilé permet d'utiliser les profilés comme matériau de départ sans obstruer le passage de l'air qui se dirige vers les trous H mentionnés plus haut.

Pour réduire l'entrée d'eau par les trous H lorsqu'il pleut, on prévoit un quatrième profilé 4 destiné à coiffer le second profilé 2 et qui comprend des languettes latérales 4a qui s'étendent en porte-à-faux sur les trous H.

De cette manière, on ne fait pas obstacle au passage de l'air tout en évitant l'entrée d'eau qui pourrait avoir des incidences sur l'installation dans sa partie supérieure.

Comme alternative à l'utilisation d'un quatrième profilé 4, on prévoit que le second profilé 2 soit pourvu de languettes additionnelles 2c s'étendant en porte-à-faux sur les trous H, pour réduire l'entrée d'eau dans ces trous H en cas de pluie.

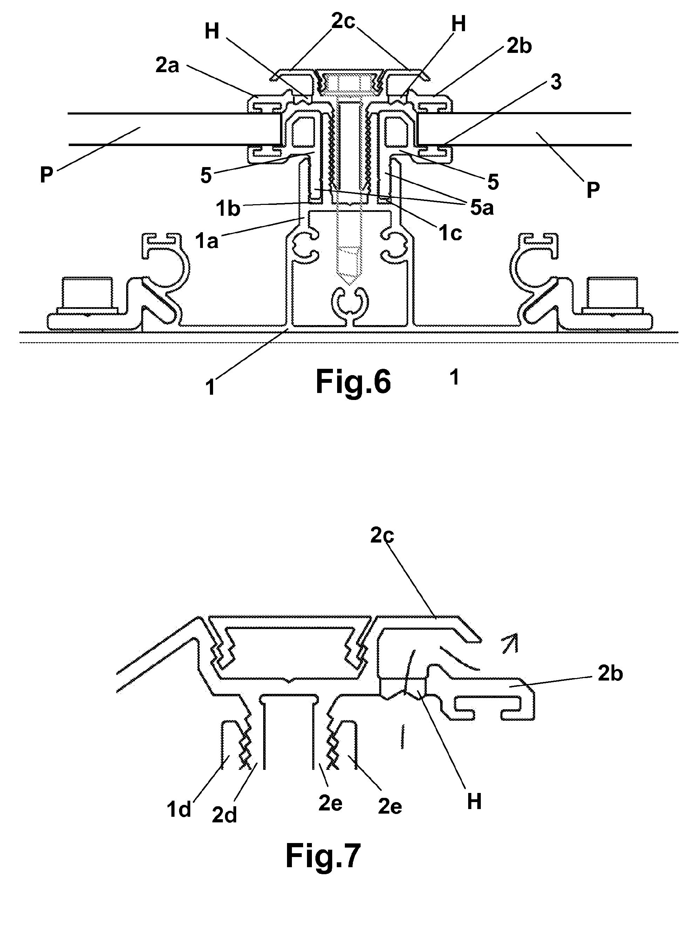

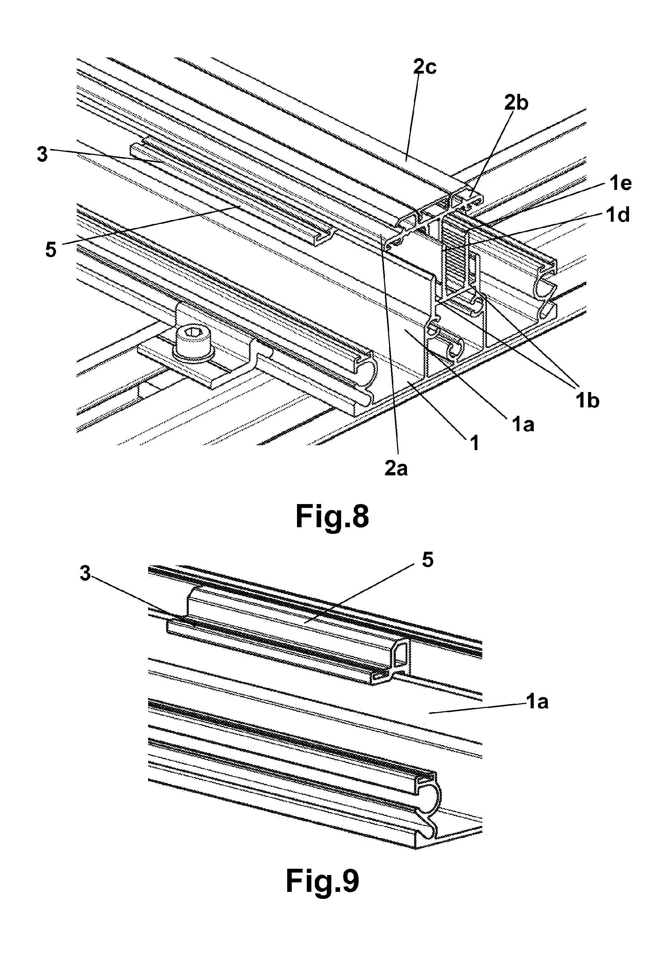

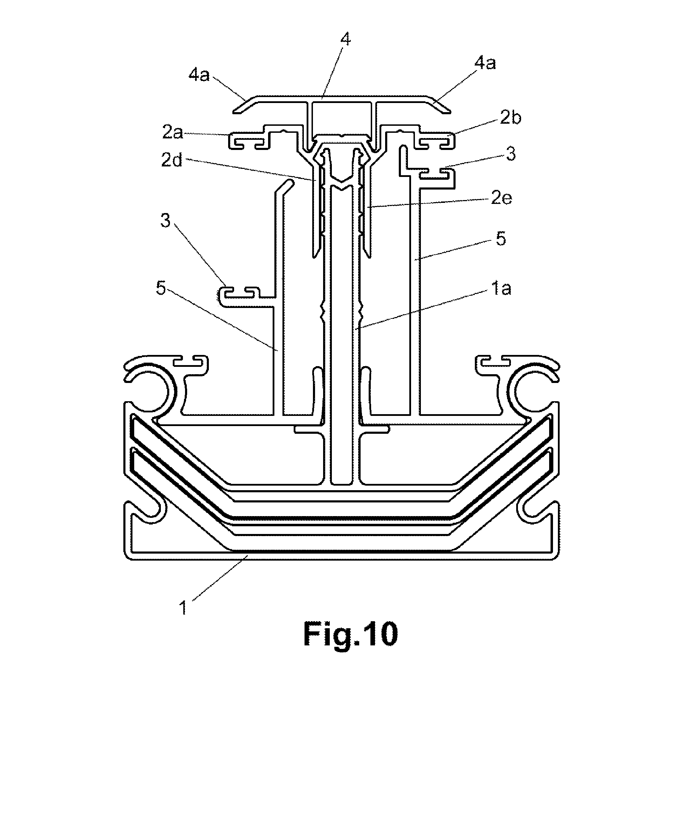

Pour la fixation des sections de profilé 5 à l'âme 1a, on prévoit trois possibilités:
a) comme on peut le voir sur les figures 1 et 2, que l'âme comprenne cette fixation de chaque côté des deux rainures d'emboîtement 1b et 1c destinées à recevoir deux languettes d'accrochage 5a des dites sections du profilé 5, de manière à constituer des moyens de fixation des sections de ce profilé 5 à l'âme 1a, qui empêchent ses mouvements vertical, latéral et de rotation (tout en permettant son glissement le long de l'âme).
b) comme on peut le voir dans les figures 6 et 8, que l'âme comprenne de chaque côté une rainure d'emboîtement 1b d'une ampleur constante et que la languette 5a d'accrochage des dites sections du profilé 5 s'étende à l'intérieur de cette rainure d'emboîtement, de manière à obtenir le même effet que celui qu'on a obtenu en a).
c) que ces sections 5 s'appuient sur deux points du premier profilé 1, par exemple sur un saillant disposé dans l'âme 1a au moyen d'un emboîtement disposé dans la zone du profilé en vis-à-vis de l'âme, ainsi qu'on le voit dans la figure 10. En ce cas, l'emboîtement peut se faire au moyen d'une concavité cylindrique dans la section du profilé 5, en combinaison avec une surface cylindrique complémentaire disposée à l'extrémité du premier profilé 1 en vis-à-vis avec l'âme 1a.

Pour assurer la stabilité de l'ensemble après le montage, et tout spécialement pour éviter le mouvement relatif entre les sections du profilé 5 et du premier profilé 1, las rainures d'emboîtement 1b, 1c comprennent sur leurs bords des saillants longitudinaux 1d qui configurent une ampleur d'entrée dans ces rainures d'une ampleur inférieure à celle des languettes d'emboîtement 5a des sections de profilé 5, de sorte qu'ils constituent des moyens de retenue par friction des sections de profilé 5 par rapport à l'âme 1a.

Le second profilé de fixation 2 est fixé par le haut a l'âme au moyen de deux pattes de fixation 2d, 2e parallèles, destinées à s'emboîter dans l'âme 1a. On prévoit deux variantes aux pattes de fixation 2d et 2d:
a) les pattes de fixation 2d, 2e se placent en dehors de l'âme la comme on peut le voir sur les figures 1 et 2.
b) les pattes de fixation 2d, 2e se placent à l'intérieur de l'âme 1a, comme on peut le voir sur les figures 6 à 8.

Par ailleurs, l'âme est également constituée de deux pattes 1d et 1e qui configurent une ouverture longitudinale d'accès supérieur. Les pattes de fixation apparaissent comme telles dans les figures en coupe, bien qu'il soit évident qu'elles consistent en deux languettes longitudinales qui s'étendent le long de tout le profilé.

Ainsi, dans la variante a, en introduisant par cette ouverture une vis T d'un diamètre nominal plus grand que le sien, la vis fait pression sur les pattes de fixation mentionnées 1e, 1c de l'âme contre les pattes de fixation 2d, 2e du second profilé, fixant de cette manière le second profilé 2 à l'âme 1a par pression entre les pattes mentionnées.

Pour la variante a, en introduisant par l'ouverture entre les pattes 2d et 2e une vis T de diamètre nominal plus grand que esta, la vis fait pression sur les pattes de fixation mentionnées, 2d et 2e du second profilé 2, contre les pattes de fixation 1d et 1e de l'âme 1a, fixant ainsi le second profilé 2 à l'âme 1a par pression entre les pattes mentionnées.

Les pattes de fixation 1d, 1e, 2d et 2e du premier et du second profilés peuvent être munies intérieurement de nervures ou de saillants, par exemple en dents de scie, de sorte que, lorsque les pattes font pression entre elles, elles se déforment légèrement et fixent l'ensemble d'une manière sûre.

Selon cette réalisation préférée, les languettes supérieures 2a et 2b longitudinales comprennent des joints d'étanchéité longitudinaux orientés vers le panneau P, qui permettent d'absorber les défauts de parallélisme et d'assurer en même temps l'étanchéité latérale des panneaux par rapport aux seconds profilés.

Il est aussi possible d'envisager des joints longitudinaux orientés vers le panneau P sur la surface d'appui inférieure 3, dans le but de fixer les panneaux en répartissant convenablement les sollicitations de pression entre le panneau et les sections du profilé.

Les profilés employés dans cette invention peuvent être des profilés métalliques obtenus par extrusion, de préférence en aluminium.

Dans le but d'obtenir une toiture habitable, on dispose une toile destinée à recouvrir la face inférieure des capteurs solaires, ainsi que l'installation qui est associée à ces derniers. La lámina, ou la toile, citée plus haut est fixée à la partie inférieure des profilés de fixation 1, par exemple sur la surface intérieure des extrémités de forme cylindrique, comme il est revendiqué dans la revendication 16.

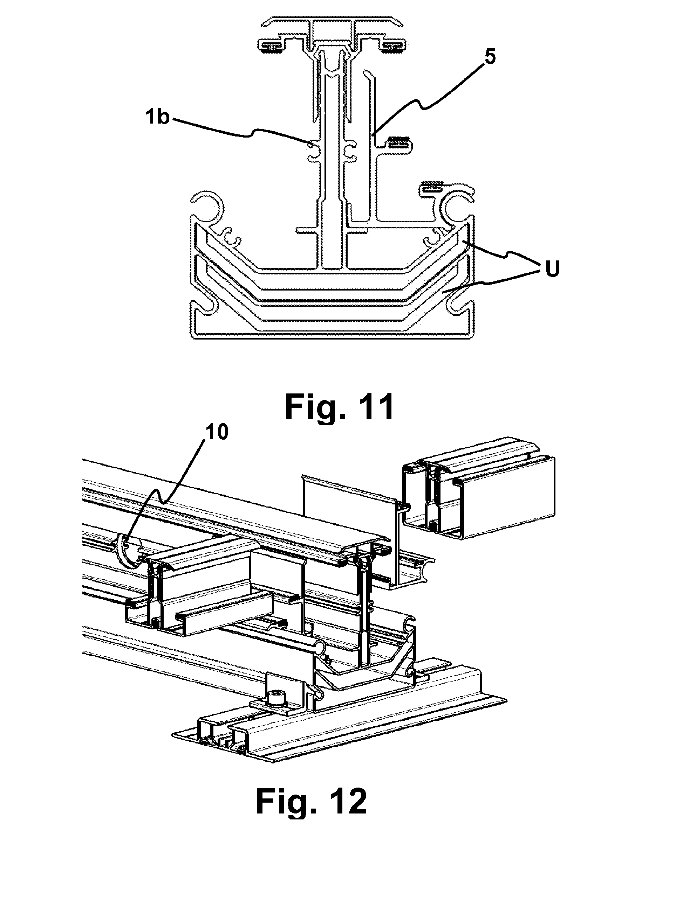

Selon une autre caractéristique avantageuse de l'invention et comme le montre la figure 12, l'âme comprend un trou traversant 10 dans sa partie médiane destinée au passage de câbles de connexion électrique entre panneaux contigus. De cette manière, l'installateur peut faire passer les câbles de de branchement entre les panneaux contigus séparés par le profilé 1, ce qui évite de les faire passer par en dessous du patin des profilés. Cette possibilité, combinée avec les toiles que l'on dispose entre les profilés 1 parallèles, permet de dissimuler tant les panneaux que les connexions électriques entre eux.

Dans le cas où l'installateur nécessiterait plus de trous traversant dans l'âme d'un profilé 1, on prévoit un rail longitudinal 1b sur l'âme précitée, ainsi que le montre la figure 11, destiné au centrage d'un outil de perforation pour faire le trou traversant de l'âme 1a.

Par ailleurs, le premier profilé 1 précité a une hauteur supérieure à (l'épaisseur des panneaux P, de sorte qu'un espace intérieur est ménagé entre les panneaux P et la toile mentionnée plus haut.

## Revendications

1. Structure de fixation de panneaux solaires (P) comprenant:
• Un premier profilé (1) de support qui comprend une âme (1a);
• Un second profilé de fixation (2) pourvu d'au moins une languette supérieure (2a, 2b) longitudinale et fixé par le haut à l'âme (la) de sorte que la languette supérieure précitée (2a, 2b) dépasse latéralement par rapport à l'âme (la) par un côté de celle-ci pour former une surface d'appui supérieure du bord supérieur d'un panneau solaire (P);
• Au moins une surface d'appui inférieure (3) des panneaux solaires (P)
• Les surfaces d'appui supérieure et inférieure précitées formant des moyens de fixation par pression des panneaux solaires (P),
**Caractérisée en ce que** le second profilé (2) comprend des trous (H) traversants sur la languette supérieure (2a, 2b) de sorte qu'il est possible d'échanger de l'air entre les deux côtés du panneau (P) et donc de le refroidir par sa partie postérieure.

2. Structure selon la revendication antérieure, comprenant des sections de profilé (5) fixées latéralement à l'âme (la) par un ou par les deux côtés, et comprenant chacun une languette qui dépasse latéralement par rapport à l'âme (la) par un côté de celle-ci pour former la surface d'appui inférieure précitée (3).

3. Structure selon n'importe laquelle des revendications antérieures, comprenant un quatrième profilé (4) destiné à coiffer ce second profilé et qui comprend des languettes latérales s'étendant en porte-à-faux au-dessus des dits trous (H), de sorte qu'ils permettent de réduire l'entrée d'eau dans ces trous (H) lorsqu'il pleut.

4. Structure selon n'importe laquelle des revendications antérieures, dans laquelle le dit second profilé (2) comprend des languettes latérales additionnelles (2c) s'étendant en porte-à-faux sur les dits trous (H), ce qui permet de réduire l'entrée d'eau dans ces trous (H) lorsqu'il pleut.

5. Structure selon n'importe laquelle des revendications antérieures, dans laquelle l'âme (la) comprend de chaque côté deux rainures d'emboîtement (1b, 1c) destinées à recevoir deux languettes d'accrochage (5a) des dites sections de profilé (5), de sorte qu'elles constituent des moyens de fixation des sections de profilé précitées (5) à l'âme (la) mentionnée plus haut.

6. Structure selon n'importe laquelle des revendications 1 à 3, dans laquelle l'âme (la) comprend de
chaque côté une rainure d'emboîtement (1b, 1c) destinée à recevoir une languette (5a) d'accrochage des dites sections de profilé (5), la rainure et la languette précitées étant configurées de manière à empêcher la rotation relative entre l'âme et les sections de profilé (5), de sorte qu'ils constituent des moyens de fixation des dites sections de profilé (5) à l'âme précitée.

7. Structure selon n'importe laquelle des deux revendications antérieures, dans laquelle les rainures d'emboîtement (1b, 1c)précitées comprennent sur leurs bords des saillants longitudinaux (1d) qui configurent une ampleur d'entrée aux rainures précitées d'une ampleur inférieure à celle des languettes d'emboîtement (5a) des dites sections de profilé (5), de sorte qu'elles constituent des moyens de retenue par friction des dites sections de profilé (5) par rapport à l'âme (la).

8. Structure selon n'importe laquelle des revendications 1 a 4, dans laquelle les sections (5) s'appuient sur deux points du premier profilé (1), en premier lieu sur un saillant disposé sur l'âme (la) au moyen d'un emboîtement disposé sur une zone du profilé en vis-à-vis de l'âme, et consistant en une concavité cylindrique dans la section du profilé (5), en combinaison avec une surface cylindrique complémentaire ménagée à l'extrémité du premier profilé (1) en regard de l'âme (1a).

9. Structure selon n'importe laquelle des revendications antérieures, dans laquelle le second profilé de fixation (2) est fixé par le haut à l'âme (la) au moyen de deux pattes de fixation (2d, 2e) parallèles, destinées à s'emboîter dans l'âme (la) par l'extérieur de celle-ci, l'âme étant également formée de deux pattes (le, 1c) qui configurent une ouverture longitudinale d'accès supérieur, de sorte qu'en introduisant par l'ouverture précitée une vis (T) d'un diamètre nominal plus grand que celui de cette ouverture, celle-ci fait pression sur les pattes de fixation (le, 1c), indiquées plus haut, de l'âme contre les pattes de fixation (2d, 2e) du dit second profilé, fixant de cette manière le second profilé (2) à l'âme (la) par pression entre les pattes ci-dessus mentionnées.

10. Structure selon n'importe laquelle des revendications antérieures, dans laquelle les languettes supérieures (2a, 2b) longitudinales comprennent des joints d'étanchéité longitudinaux (J) orientés vers le panneau (P).

11. Structure selon n'importe laquelle des revendications antérieures, dans laquelle la surface d'appui inférieure (3) des panneaux solaires (P) comprend des joints d'étanchéité longitudinaux (J) orientés vers le panneau (P).

12. Structure selon n'importe laquelle des revendications antérieures, comprenant des languettes supérieures (2a, 2b) longitudinales et des surfaces d'appui inférieures (3) sur les deux côtés de l'âme.

13. Structure selon n'importe laquelle des revendications antérieures dans laquelle l'âme comprend un trou traversant (10) dans sa partie médiane destiné au passage de câbles de connexion électrique entre panneaux contigus.

14. Structure selon la revendication antérieure dans laquelle l'âme (la) comprend un rail longitudinal (1b) destiné au centrage d'un outil de perforation pour faire le trou traversant de l'âme (la).

15. Structure selon la revendication 8 où n'importe laquelle des revendications 9 à 14 dépendant de la revendication 8 précédemment mentionnée, dans laquelle la concavité cylindrique dans la section du profilé (5) est creuse et accessible du côté qui n'est pas en vis-à - vis de l'âme (la) de sorte que l'on peut l'utiliser pour la fixation au moyen d'un goujon de toiles de protection entre deux premiers profilés (1) contigus.

16. Structure selon n'importe laquelle des revendications antérieures dans laquelle les premiers profilés (1) précités comprennent à leur base - ou patin-inférieure deux canaux longitudinaux parallèles destinés à loger des profilés d'union (U) entre les profilés contigus selon la direction longitudinale de ceux-ci.
